# EUROPÄISCHE PATENTSCHRIFT

(11) **EP 1 307 398 B1**
(45) Veröffentlichungstag und Bekanntmachung des Hinweises auf die Patenterteilung: **31.03.2004**
(21) Anmeldenummer: 01960141.8
(22) Anmeldetag: 02.08.2001
(51) Int. Cl.: B81B 3/00, H01G 5/14

(54) **ANORDNUNG MIT VARIABLER KAPAZITÄT**
ASSEMBLY HAVING A VARIABLE CAPACITANCE
ENSEMBLE A CAPACITE VARIABLE

(30) Priorität: 09.08.2000 DE 10038723
(43) Veröffentlichungstag der Anmeldung: 07.05.2003
(73) Patentinhaber: Fraunhofer-Gesellschaft zur Förderung der angewandten Forschung e.V., 80686 München (DE)
(72) Erfinder: QUENZER, Hans-Joachim, 25524 Itzehoe (DE); WAGNER, Bernd, 25582 Looft (DE); WENK, Beatrice, F-38000 Grenoble (FR)
(74) Vertreter: Gagel, Roland, Dr.
(86) Internationale Anmeldenummer: PCT/DE2001/002960
(87) Internationale Veröffentlichungsnummer: WO 2002/012117

(56) Entgegenhaltungen:
- EP-A- 0 391 126
- EP-A- 0 516 174
- WO-A-99/16096
- FR-A- 2 704 357

## Beschreibung

### Technisches Gebiet

Die vorliegende Erfindung betrifft eine Anordnung mit variabler Kapazität gemäß dem Oberbegriff des Patentanspruches 1 sowie ein Verfahren zum Einstellen einer vorgebbaren Kapazität unter Einsatz dieser Anordnung.

Das Hauptanwendungsgebiet der vorliegenden Anordnung liegt im Bereich der Hochfrequenztechnik, insbesondere bei Applikationen in der Kommunikationstechnik. In diesem Bereich besteht eine zunehmende Nachfrage nach einstellbaren Hochfrequenzkapazitäten mit einer möglichst großen Güte. Bisher werden hierfür Halbleiterbauelemente, sogenannte Varaktoren, eingesetzt, die jedoch maximale Q-Faktoren zwischen 20 und 40 erreichen. Gerade für den Einsatz in Mobiltelefonen bzw. Handy's sind jedoch Q-Faktoren von mindestens 100 wünschenswert. Diese hohen Q-Faktoren in einem Schwingkreis lassen sich derzeit nur mit mikromechanischen Kondensatoren erreichen.

### Stand der Technik

Bei mikrotechnisch hergestellten Kondensatoren handelt es sich um mechanisch bewegliche Elemente, mit denen der Abstand oder Überdeckungsgrad zweier Kondensatorplatten verändert werden kann, um unterschiedliche Kapazitäten einzustellen. Beim Einsatz derart beweglicher Elemente lässt sich jedoch eine Reaktion des Bauelementes auf äußere Beschleunigungen nicht vollständig ausschließen. Hinzu kommt, dass bei den im Hochfrequenzbereich gerade bei Mobiltelefonen eingesetzten Frequenzen von 0,8 - 2 GHz und den angestrebten niedrigen Dämpfungen in erster Linie metallische Werkstoffe als Grundmaterial für die beweglichen Elemente eingesetzt werden. Deren spezifische Dichte ist deutlich größer als etwa die von Silizium, so dass die Masse des beweglichen Elements durch diese Materialien zusätzlich erhöht wird. Niedrige Antriebsspannungen und daraus resultierende niedrige Antriebskräfte für die beweglichen Elemente machen in Verbindung mit den erwünschten Stellwegen von einigen 10 µm vergleichsweise weiche Aufhängungen notwendig.

Auf der anderen Seite sollte eine einstellbare Kapazität für den mobilen Einsatz möglichst stabil sein, so dass sowohl thermische alsauch mechanische Einwirkungen von außen nicht zu einer Drift der Kapazität führen können. Diese Widerstandsfähigkeit insbesondere gegen Beschleunigungen ist mit den obigen Eigenschaften der bekannten mikromechanischen Anordnungen nicht zu erreichen.

In der Drückschrift EP 0 516 174 A2, die als nächstliegender Stand der Technik angesehen werden kann, wird ein miniaturisierter Tuner beschrieben, der im Mikrometer- und Millimeter-Wellenlängenbereich arbeitet. Der Tuner verfügt über einen elektrostatisch anzuregenden Aktor, der in Abhängigkeit eines Eingangssignals eine Übertragungseinheit dynamisch regeln kann. Der auf Basis der Technologien zur Herstellung integrierter Schaltkreise gefertigte Tuner weist ein Substrat auf, auf dem eine Übertragungseinheit aufgebracht ist, die über wenigstens eine Aktor verfügt, der relativ zur Übertragungseinheit bewegbar ist. Die Übertragungseinheit verfügt über Steuerelektroden, die zweireihig angeordnet sind und zwischen denen sich der Aktor bewegt. In dieser Drückschrift wird beschrieben, dass sich der Aktor aufgrund elektrostatischer Kräfte quer zu den einzelnen Steuerelektroden entlang einer Führung auf die Übertragungseinheit zu oder von ihr Weg bewegen kann. Durch das Verschieben des Aktors wird die Impedanz der Empfängereinheit verändert und somit ein dynamischer Tuner realisiert.

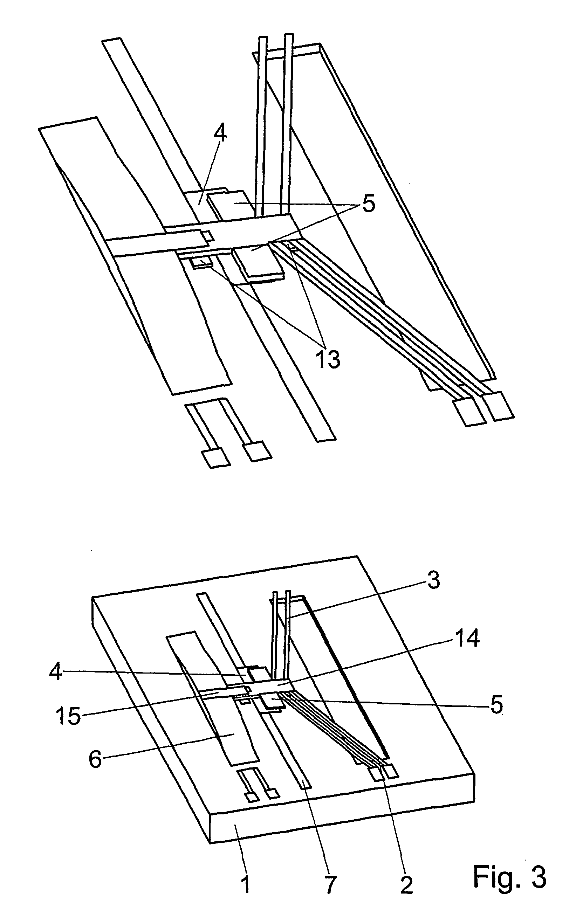

In der FR 2 704 357 werden elektronische Bauelemente mit variablen elektrischen Größen, die an einem Hochfrequenzschaltkreis angeschlossen sind, beschrieben. Bei dem in dieser Drückschrift erläuterten elektrischen Bauelement werden verschiedene, zum Teil elektrisch leitende Schichten auf einem Substrat aufgebracht, in denen Teilweise Mikrostrukturen vorgesehen sind. In der Figur 3 ist bspw. ein Bauelement dargestellt, bei dem sich gegenüberliegende, räumlich voneinander getrennte Kontaktstifte in die Ausnehmung einer Schicht hineinreichen. Die beiden stifte, die nicht miteinander verbunden sind, sind jeweils auf den gegenüber liegenden Seiten mit Leiterbahnen verbunden. Durch das Anlegen eines elektrisches Feldes könne diese beiden Stifte aufeinander zu- bzw. voneinander wegbewegt werden. Weiterhin ist in dieser Drückschrift offenbart, dass es sich bei den variablen, elektrischen Eigenschaften der Bauelemente, die z.B. mit den beschriebenen, beweglichen Stiften eingestellt werden können, um die Kapazität, die Impedanz oder die effektive Länge eines elektrisches Pfades handeln kann.

Die Aufgabe der vorliegenden Erfindung besteht darin, eine Anordnung mit variabler Kapazität sowie ein Verfahren zum Betrieb dieser Anordnung anzugeben, die eine hohe Stabilität der jeweils eingestellten Kapazität gegenüber äußeren Einflüssen gewährleisten.

### Darstellung der Erfindung

Die Aufgabe wird mit der Anordnung nach Anspruch 1 sowie mit dem Verfahren nach Anspruch 18 gelöst. Vorteilhafte Ausgestaltungen der Anordnung sowie des Verfahrens sind Gegenstand der Unteransprüche.

Bei der erfindungsgemäßen Anordnung wird die variable Kapazität durch eine veränderbare Überdeckung oder einen veränderbaren Abstand zumindest eines ersten und eines zweiten elektrisch leitfähigen Bereiches gebildet. Unter einer Überdeckung ist in der vorliegenden Patentanmeldung eine zumindest teilweise gegenseitige Überdeckung der beiden Bereiche bei einer Blickrichtung im Wesentlichen senkrecht oder parallel zur Oberfläche des Substrates der Anordnung zu verstehen.

Der erste elektrisch leitfähige Bereich ist hierbei auf oder in dem Substrat und der zweite elektrisch leitfähige Bereich an oder in einem Aktorelement eines ersten mikromechanischen Aktors ausgebildet. Beide Bereiche sind vorzugsweise durch ebene Schichten oder plattenförmige Elemente gebildet und stehen bei jeder Einstellung der Kapazität im Wesentlichen parallel zueinander. Dies ist jedoch keine notwendige Voraussetzung für die Funktion der Anordnung.

Der erste mikromechanische Aktor ist derart ausgebildet und am Substrat angeordnet, dass er eine Bewegung des Aktorelementes mit dem zweiten Bereich entlang der Oberfläche des Substrates an unterschiedliche Positionen relativ zum ersten Bereich ausführen kann, an denen der zweiten Bereich den ersten Bereich zumindest teilweise überdeckt. Der erste Bereich ist hierbei vorzugsweise in oder unterhalb der Substratoberfläche und parallel zu dieser angeordnet. Der erste Bereich kann sich jedoch auch in Form eines separaten Aufbaus senkrecht zur Substratoberfläche erstrecken.

In den unterschiedlichen Positionen, die vom Aktorelement eingenommen werden können, liegen somit unterschiedliche Abstände und/oder Überdeckungsgrade zwischen erstem und zweitem Bereich vor, woraus eine unterschiedliche Kapazität resultiert. Erfindungsgemäß sind auf dem Substrat weiterhin Haltemittel vorgesehen, die das Aktorelement in den unterschiedlichen Positionen gegen das Substrat oder einen mechanischen Anschlag am Substrat ziehen oder drücken und in dieser Position halten können. Diese Haltefunktion der vorliegenden Anordnung verhindert eine Veränderung der jeweils eingestellten Positionen und somit der eingestellten Kapazität bei Einwirkung äußerer Einflüsse. Hierdurch wird ein Maximum an Stabilität der eingestellten Kapazität erreicht.

Die Fixierung des Aktorelementes gegenüber dem Substrat bzw. dem ersten Bereich kann sowohl durch eine elektrostatische Haltekraft als auch durch ein weiteres rein mechanisch auf das Aktorelement einwirkendes Halteelement sichergestellt werden.

Die Haltemittel für die Realisierung einer elektrostatischen Haltefunktion können hierbei sehr einfach durch Ausbildung weiterer elektrisch leitfähiger Bereiche am oder im Aktorelement und am oder im Substrat erreicht werden, die sich bei den unterschiedlichen einzustellenden Positionen jeweils gegenüberliegen, so dass das Aktorelement durch Anlegen einer Spannungsdifferenz zwischen diesen weiteren elektrisch leitfähigen Bereichen gegen die Substratoberfläche gezogen wird. Selbstverständlich muss zur Vermeidung eines Kurzschlusses entweder eine Isolationsschicht über dem zusätzlichen elektrisch leitfähigen Bereich am Aktorelement oder am Substrat ausgebildet sein, oder die jeweiligen Bereiche werden durch Abstandshalter oder Anschläge am Substrat oder am Aktorelement auf Abstand gehalten. Dies gilt auch für den ersten und den zweiten elektrisch leitfähigen Bereich, die die variable Kapazität bilden. Auch diese Bereiche dürfen sich bei einer Realisierung der Haltestellung nicht direkt berühren.

Die Haltemittel können auch durch einen thermomechanischen Mikroaktor realisiert werden. Dieser Mikroaktor ist relativ zum ersten mikromechanischen Aktor derart ausgebildet und angeordnet, dass er bei einer thermischen Anregung im Wesentlichen senkrecht zur Oberfläche des Substrates ausgelenkt wird und ein erster Abschnitt des Aktorelementes des ersten mikromechanischen Aktors in den unterschiedlichen einzustellenden oder einstellbaren Positionen bis unter einen zweiten Abschnitt des thermomechanischen Aktors - wenn dieser sich in einem ausgelenkten Zustand befindet - reicht. Durch Abschalten des thermomechanischen Aktors wird dann das Aktorelement des ersten mikromechanischen Aktors zwischen dem zweiten Abschnitt des thermomechanischen Aktors und dem Substrat eingeklemmt. Durch diese Klemmwirkung lässt sich in vorteilhafter Weise eine Haltefunktion realisieren, die keine Energiezufuhr beim Halten erfordert. Zum Lösen dieser Haltestellung wird der thermomechanische Aktor wiederum beheizt, so dass er sich ausdehnt bzw. ausgelenkt wird und somit den ersten mikromechanischen Aktor wieder freigibt.

Zusätzlich können die jeweils übereinanderliegenden Abschnitte der beiden Aktoren entsprechende Strukturen aufweisen, die ein Ineinandergreifen bzw. Ineinanderhaken bei den jeweiligen Haltepositionen ermöglichen. Dies stellt eine besonders stabile Haltestellung sicher.

Der erste mikromechanische Aktor kann beispielsweise als elektrostatischer oder als thermomechanischer Aktor ausgeführt sein. Selbstverständlich sind bei entsprechender Eignung auch nach anderen Antriebsprinzipien arbeitende Mikroaktoren einsetzbar. Elektrostatische Mikroaktoren eignen sich jedoch gerade für den Einsatz in einem netzunabhängigen Gerät wie beispielsweise einem Mobiltelefon aufgrund ihres geringen Energieverbrauchs in besonderer Weise. Weiterhin können mit einem elektrostatischen Antrieb sehr schnelle Schaltzeiten im Bereich von 100 µs realisiert werden.

Dem Fachmann ist der Aufbau geeigneter mikromechanischer Aktoren geläufig, die für den Einsatz in der erfindungsgemäßen Anordnung geeignet sind. Zur Herstellung derartiger Mikroaktoren sowie der vorliegenden Anordnung sind die bekannten Verfahren der Mikrostrukturtechnik einsetzbar. Für die Herstellung der variablen Kondensatoren kommen hierbei insbesondere Verfahren in Frage, die entweder Polysilizium oder Metalle für die Realisierung der eigentlichen mechanischen Komponenten einsetzen. Beide Herstellungstechniken gehören zum Bereich der Oberflächenmikromechanik.

Beim Betrieb der erfindungsgemäßen Anordnung werden der erste mikromechanische Aktor bestimmungsgemäß ausgelenkt und bei Erreichen der gewünschten Position bzw. Kapazität die Haltemittel zum Halten dieser Position angesteuert. Die jeweils aktuelle Position des Aktorelementes kann dabei vorzugsweise durch die Messung einer geeigneten Vergleichskapazität (bzw. Differenz-Kapazität) auf dem Substrat erfolgen. Die Messung dieser Vergleichskapazität während der Auslenkung ermöglicht eine sehr hohe Auflösung bzw. sehr genaue Einstellung der variablen Kapazität. Die Vergleichskapazität kann durch zusätzliche kleine Kapazitäten, die beispielsweise neben der eigentlichen variablen Kapazität (Hochfrequenz-Kapazität) liegen, gebildet werden. Diese zusätzlichen Kapazitäten können als positionsempflindliche Sensoren eingesetzt werden. Die eigentliche Zielkapazität wird allerdings erst beim Aktivieren der Haltefunktion erreicht, da diese Haltefunktion zumindest in der bevorzugten Ausführungsform der Anordnung den Abstand zwischen dem ersten und dem zweiten elektrisch leitfähigen Bereich nochmals verändert. Beim Betreiben der vorliegenden Anordnung in einer Closed-Loop-Anordnung unter Einbeziehung der zusätzlichen Vergleichskapazität bzw. Vergleichskapazitäten kann somit die gewünschte Kapazität der Anordnung mit hoher Genauigkeit eingestellt werden.

In einer vorteilhaften Betriebsweise wird der erste mikromechanische Aktor mit seiner Eigenfrequenz periodisch angesteuert. Dies lässt sich insbesondere bei einem elektrostatischen Antrieb dieses Aktors auf einfache Weise realisieren. Der zweite elektrisch leitfähige Bereich überstreicht dabei periodisch den ersten elektrisch leitfähigen Bereich und wird bei Erreichen der gewünschten Position durch Ansteuern der Haltemittel fixiert, so dass der gewünschte Kapazitätswert festgehalten wird. Durch die periodische Ansteuerung lassen sich große Auslenkungen des Aktorelementes mit vergleichsweise niedrigen Antriebsspannungen erreichen. Weiterhin wird bei dieser Betriebsvariante der Anordnung vorzugsweise die oben dargelegte Closed-Loop-Anordnung zur Positionsbestimmung eingesetzt.

Der Arbeitsbereich der erfindungsgemäßen Anordnung lässt sich dadurch erweitern, dass eine Reihe von zusätzlichen schaltbaren Kapazitäten auf dem Substrat angeordnet wird. Diese schaltbaren Zusatzkapazitäten bestehen beispielsweise aus festen Kapazitäten, die über geeignete Hochfrequenzschalter der variablen Kapazität hinzugeschaltet werden können. Die zusätzlich schaltbaren diskreten Kapazitäten können dabei auch in deren Kapazitäten in einer binären Anordnung ausgeführt werden. Durch die Kombination eines solchen Kapazitätsnetzwerks mit der eigentlichen variablen Kapazität kann ein weiter Bereich an Kapazitätswerten eingestellt werden.

In einer weiteren alternativen Ausgestaltung werden mehrere der erfindungsgemäßen Anordnungen auf einem Substrat angeordnet, deren variable Kapazitäten parallel geschaltet werden.

Die erfindungsgemäße Anordnung sowie das zugehörige Verfahren werden nachfolgend anhand von Ausführungsbeispielen in Verbindung mit den Zeichnungen ohne Beschränkung des allgemeinen Erfindungsgedankens nochmals beispielhaft erläutert. Hierbei zeigen:
- Figur 1: ein erstes Beispiel für die Ausgestaltung einer erfindungsgemäßen Anordnung mit elektrostatischen Antrieben;
- Figur 2: eine 3D-Ansicht des Beispiels der Figur 1;
- Figur 3: ein zweites Beispiel für eine Ausgestaltung der erfindungsgemäßen Anordnung mit thermomechanischen Antrieben; und
- Figur 4: ein weiteres Beispiel einer Ausgestaltung der erfindungsgemäßen Anordnung.

### Wege zur Ausführung der Erfindung

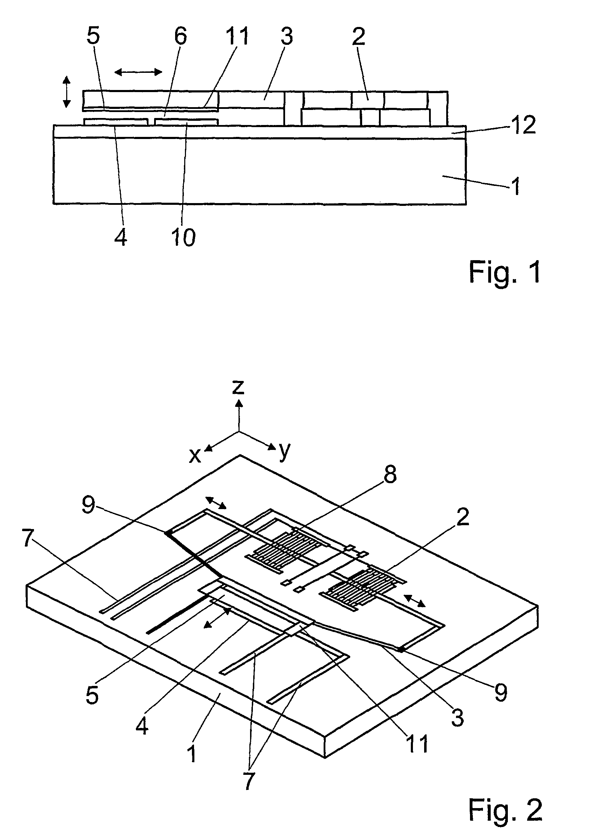

Figur 1 zeigt ein erstes Beispiel für eine Ausgestaltungsmöglichkeit der erfindungsgemäßen Anordnung. Bei dieser Ausgestaltung werden elektrostatisch betriebene Aktoren zur Veränderung der Kapazität und zur Realisierung der Haltefunktion eingesetzt. Der erste mikromechanische Aktor 2, im Folgenden als lateraler Aktor bezeichnet, erzeugt einen Hub seines Aktorelementes 3 parallel zur Oberfläche des Substrates 1. Mit diesem lateralen Aktor 2 wird somit die Einstellung der Überdeckung des ersten elektrisch leitfähigen Bereiches 4 und des zweiten elektrisch leitfähigen Bereichs 5 zur Bildung der Kapazität erreicht. Der erste elektrisch leitfähige Bereich 4 ist hierbei auf einer Isolationsschicht 12 auf der Oberfläche des Substrates 1 angeordnet. Der zweite elektrisch leitfähige Bereich 5 ist an der Unterseite des Aktorelementes 3 ausgebildet.

Die Haltefunktion wird durch einen zweiten mikromechanischen Aktor 6 erreicht, der durch zwei sich gegenüberliegende elektrisch leitfähige Bereiche 10, 11 auf der Oberfläche des Substrates 1 bzw. an der Unterseite des Aktorelementes 3 gebildet wird. Dieses im Folgenden als vertikaler Aktor bezeichnete Haltemittel zieht das Aktorelement 3 nach Erreichen seiner Sollposition auf das Substrat 1 herunter und fixiert auf diese Weise die Position des Aktorelementes 3 bzw. des zweiten Bereiches 5 relativ zum ersten Bereich 4. Die Bewegungsrichtungen des vertikalen und des lateralen Aktors sind in der Abbildung durch die Pfeile angedeutet. Bei beiden Aktoren handelt es sich um Aktoren mit elektrostatischen Antrieben. Das Anziehen des ersten Aktorelementes 3 an das Substrat 1 mit dem vertikalen Aktor 6 erfolgt bis auf entsprechende Anschlagstrukturen auf dem Substrat, die in der Figur nicht dargestellt sind. Diese isolierten Auflagen verhindern einen elektrischen Kurzschluss der durch die beiden elektrisch leitfähigen Bereiche 4, 5 gebildeten variablen Kapazität.

Figur 2 zeigt eine dreidimensionale Ansicht einer erfindungsgemäßen Anordnung, wie sie in Figur 1 dargestellt ist. Auch in dieser Figur ist wiederum das Substrat 1 mit dem ersten elektrisch leitfähigen Bereich 4 zu erkennen, auf dem der laterale Aktor 2 mit einem entsprechenden Aktorelement 3 angeordnet ist. Das Aktorelement 3 wird hierbei durch balkenförmige Elemente gebildet, die an ihrem Ende ein plattenförmiges Element 5 als zweiten elektrisch leitfähigen Bereich tragen. Neben diesem zweiten Bereich 5 sind elektrisch leitfähige Bereiche 11 vorgesehen, die zusammen mit am Substrat 1 befindlichen elektrisch leitfähigen Bereichen 10 den vertikalen Aktor 6 bilden. Der laterale elektrostatische Antrieb des ersten Aktors 2 erfolgt über Parallelplatten-Kondensatoren 8, die kammförmig angeordnet sind. Damit wird eine Bewegung längs der y-Achse erreicht, wie sie durch zwei Pfeile angedeutet ist. Um einen möglichst großen lateralen Hub mit dem elektrostatischen Antrieb zu erreichen, ist das Aktorelement 3 im vorliegenden Beispiel mit einer mechanischen Umsetzung ausgestattet, die den erreichbaren Hub etwa um einen Faktor 5 - 6 steigert. Diese Umsetzung wird durch zwei Biegegelenke 9 erreicht, die die Bewegung in y-Richtung in eine Bewegung in x-Richtung umsetzen und zugleich vergrößern. Die resultierende Bewegung in x-Richtung ist wiederum durch einen Pfeil angedeutet. Durch diese mechanische Umsetzung ist es möglich, mit elektrostatischen Antriebsspannungen von unter 12 V Hübe von 20 - 30 µm zu erreichen.

Die Zuführungen 7 zu den Aktoren 2, 6 bzw. der variablen Kapazität 4, 5 sind in der Figur schematisch angedeutet.

Figur 3 zeigt ein zweites Ausführungsbeispiel für eine Ausgestaltung der erfindungsgemäßen Anordnung. Bei diesem Beispiel werden thermomechanische Aktoren sowohl zur Erzeugung der lateralen Auslenkung wie auch zur Realisierung der Haltefunktion eingesetzt. In der Figur ist wiederum das Substrat 1 mit dem darauf befindlichen ersten elektrisch leitfähigen Bereich 4 zu erkennen. Auf dem Substrat sind weiterhin der horizontale thermomechanische Aktor 2 sowie der vertikale thermomechanische Aktor 6 dargestellt. Der erste thermomechanische Aktor 2 bewegt die obere Platte 5 des Hochfrequenz-Kondensators in horizontaler Richtung über das Substrat 1. Durch Änderung der Überdeckung der beiden Kondensatorplatten 4, 5 können die unterschiedlichen Kapazitäten eingestellt werden. Der laterale Aktor 2 besteht hierbei aus einer Anordnung von Biegeelementen 3, die höher als breit sind. Bei einer Erwärmung durch einen integrierten Heizer unterhalb dieser Biegeelemente 3 bewegt sich der gesamte Aktor bzw. das gesamte Biegeelement parallel zur Substratoberfläche. An dem Aktorelement 3 ist der plattenförmige zweite elektrisch leitfähige Bereich 5 unter einem sich in Bewegungsrichtung erstreckenden weiteren plattenförmigen Ausleger 14 angeordnet.

Der vertikale Aktor 6 besteht aus einem plattenförmigen Element, dessen Breite deutlich größer als dessen Dicke ist, und das an zwei Enden am Substrat 1 eingespannt ist. Durch diese Ausgestaltung biegt sich die Platte bei Erwärmung senkrecht zur Oberfläche des Substrates 1 aus. Die Erwärmung erfolgt durch einen Stromfluss durch in die Platte integrierte Heizleiter oder Heizschichten.

Durch das Einhalten einer bestimmten Reihenfolge beim Ein- bzw. Ausschalten der beiden Aktoren 2, 6 kann der laterale Aktor 2 durch Absenken des vertikalen Aktors 6 in seiner Position festgehalten werden. Für das Einstellen eines gewünschten Kapazitätswertes wird daher der laterale Aktor 2 aktiviert und in eine bestimmte Position gefahren, so dass der erforderliche Überdeckungsgrad der beiden Kondensatorflächen 4, 5 vorliegt. Der laterale Aktor wird bei dieser Auslenkung mit seinem Ausleger 14 bis unter einen Ausleger 15 des vertikalen Aktors 6 geschoben, der sich zu diesem Zeitpunkt ebenfalls in einer ausgelenkten Position befinden muss. Durch Ausschalten des vertikalen Aktors 6 senkt sich dieser auf den Ausleger 14 des lateralen Aktors 2 und klemmt ihn auf dem Substrat bzw. auf entsprechenden Auflageflächen 13 auf dem Substrat fest. Die Auflageflächen 13 sind in der vergrößerten Darstellung im linken oberen Bereich der Figur zu erkennen. Durch die Nutzung dieser mechanischen Klemmung entfällt der Nachteil des hohen Energiebedarfs thermomechanischer Aktoren. Die elektrische Leistung muss bei dieser Anordnung lediglich während der vergleichsweise kurzen Umschaltphasen zugeführt werden.

Die Verwendung thermomechanischer Aktoren hat andererseits den besonderen Vorteil, dass sich damit relativ große laterale Bewegungen und damit vergleichsweise große Einstellbereiche für die Kapazität erreichen lassen. In der Figur sind auch schematisch Strukturen zu erkennen, die ein Verhaken des Auslegers 14 des lateralen Aktors 2 mit dem Ausleger 15 des vertikalen Aktors 6 ermöglichen.

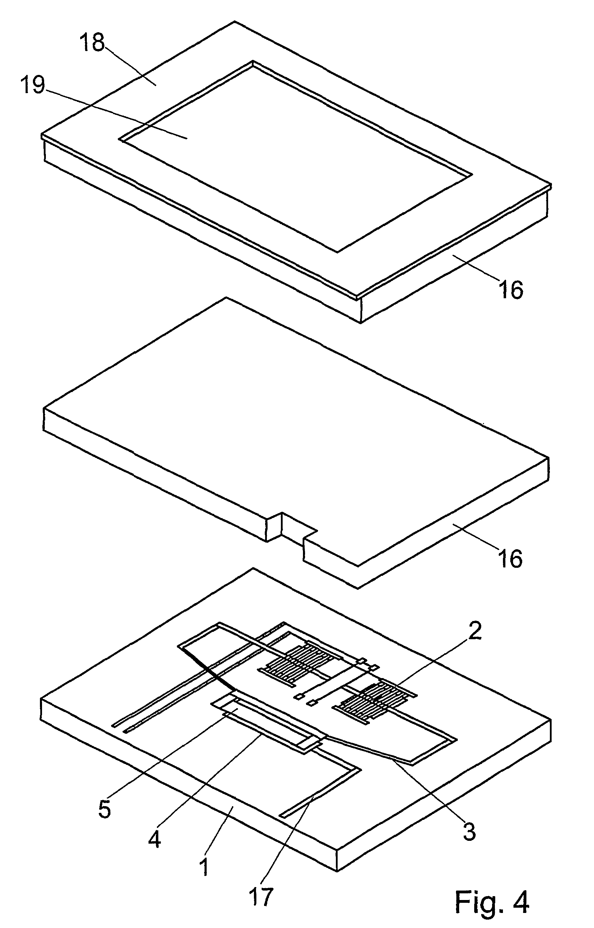

Figur 4 zeigt schließlich ein weiteres Ausführungsbeispiel für die Ausgestaltung einer erfindungsgemäßen Anordnung, bei der ein Deckelchip 16 als Schutz der Anordnung auf dem Substrat 1 angebracht wird. Die Anordnung selbst mit dem lateralen Aktor 2, dem Aktorelement 3 sowie der Kapazität 4, 5 entspricht der der Figuren 1 und 2. In diesem Beispiel sind die Zuleitungen zur Hochfrequenz-Kapazität 4, 5 als Mikrostripleitungen 17 ausgeführt, um eine möglichst dämpfungsarme Zuleitung zu erreichen. Hierzu wird das Innere des Dekkels 16, das im oberen Teil der Abbildung nochmals von unten dargestellt ist, mit einer geeigneten Metallschicht 19 belegt. Diese Metallschicht 19 kann beispielsweise aus Kupfer, Gold oder Silber gefertigt werden. Der Deckel 16 kann bei der Herstellung der Anordnung entweder auf Wafer- oder auf Chipebene montiert werden. In jedem Fall sollte der Deckel jedoch vor dem Vereinzeln des Wafers montiert werden, um ein Verschmutzen der Anordnung zu verhindern. Die Metallschicht 19 ist in diesem Beispiel von einem Glaslotrahmen 18 umgeben.

### Bezugszeichenliste

- 1: Substrat
- 2: erster bzw. lateraler Mikroaktor
- 3: Aktorelement
- 4: erster elektrisch leitfähiger Bereich
- 5: zweiter elektrisch leitfähiger Bereich
- 6: zweiter bzw. vertikaler Mikroaktor
- 7: Zuleitungen
- 8: Parallelplatten-Kondensatoren
- 9: Biegegelenke
- 10: dritter elektrisch leitfähiger Bereich
- 11: vierter elektrisch leitfähiger Bereich
- 12: Isolationsschicht
- 13: Auflageflächen
- 14: Ausleger am lateralen Aktor
- 15: Ausleger am vertikalen Aktor
- 16: Deckelchip
- 17: Mikrostripleitung
- 18: Glaslotrahmen
- 19: metallische Beschichtung

## Patentansprüche

1. Anordnung mit variabler Kapazität, die durch eine veränderbare Überdeckung oder einen veränderbaren Abstand zumindest eines ersten (4) und eines zweiten elektrisch leitfähigen Bereiches (5) gebildet wird, wobei der erste elektrisch leitfähige Bereich (4) auf oder in einem Substrat (1) und der zweite elektrisch leitfähige Bereich (5) an oder in einem Aktorelement (3) eines ersten mikromechanischen Aktors (2) ausgebildet ist, der derart am Substrat (1) angeordnet ist, dass er mit einem ersten Antrieb eine Bewegung des Aktorelementes (3) mit dem zweiten Bereich (5) entlang einer Oberfläche des Substrates (1) an unterschiedliche Positionen relativ zum ersten Bereich (4) ausführen kann, an denen der zweite Bereich (5) den ersten Bereich (4) zumindest teilweise überdeckt,
**dadurch gekennzeichnet,**
**dass** zusätzlich Haltemittel (6, 10, 11) vorgesehen sind, die das Aktorelement (3) mit einem vom ersten unabhängigen zweiten Antrieb in den unterschiedlichen Positionen gegen das Substrat (1) oder einen mechanischen Anschlag (13) am Substrat (1) ziehen oder drücken und in diesen Positionen halten können.

2. Anordnung nach Anspruch 1,
**dadurch gekennzeichnet,**
**dass** die Haltemittel (6, 10, 11) durch zumindest einen dritten elektrisch leitfähigen Bereich (10) am oder im Substrat (1) und einen vierten elektrisch leitfähigen Bereich (11) am oder im Aktorelement (3) gebildet werden, die sich in den unterschiedlichen Postitionen des Aktorelementes (3) zumindest teilweise überdecken und mit einer elektrischen Spannungsdifferenz beaufschlagbar sind.

3. Anordnung nach Anspruch 1,
**dadurch gekennzeichnet,**
**dass** die Haltemittel (6, 10, 11) durch einen zweiten mikromechanischen Aktor (6) gebildet werden.

4. Anordnung nach Anspruch 3,
**dadurch gekennzeichnet,**
**dass** der zweite mikromechanische Aktor (6) ein thermomechanischer Aktor ist, der derart ausgebildet und relativ zum ersten mikromechanischen Aktor (2) angeordnet ist, dass er bei einer thermischen Anregung im Wesentlichen senkrecht zur Oberfläche des Substrates (1) ausgelenkt wird und ein erster Abschnitt des Aktorelementes (3) des ersten mikromechanischen Aktors (2) in den unterschiedlichen Positionen bis unter einen zweiten zweiten Abschnitt des zweiten mikromechanischen Aktors (6) in einem ausgelenktem Zustand reicht.

5. Anordnung nach Anspruch 4,
**dadurch gekennzeichnet,**
**dass** sich der zweite mikromechanische Aktor (6) aus ein oder mehreren balkenförmigen Elementen zusammensetzt, die beidseitig am Substrat (1) eingespannt sind.

6. Anordnung nach Anspruch 4 oder 5,
**dadurch gekennzeichnet,**
**dass** der erste Abschnitt des Aktorelementes (3) des ersten mikromechanischen Aktors (2) als plattenförmiger Ausleger (14) ausgestaltet ist, der sich in Bewegungsrichtung des Aktorelementes (3) erstreckt.

7. Anordnung nach einem der Ansprüche 4 bis 6,
**dadurch gekennzeichnet,**
**dass** der zweite Abschnitt des zweiten mikromechanischen Aktors (6) als plattenförmiger Ausleger (15) ausgestaltet ist, der sich entgegen der Bewegungsrichtung des Aktorelementes (3) des ersten mikromechanischen Aktors (2) erstreckt.

8. Anordnung nach einem der Ansprüche 4 bis 7,
**dadurch gekennzeichnet,**
**dass** der erste und der zweite Abschnitt derart ausgestaltet sind, dass sie ineinander greifen, wenn die thermische Anregung des zweiten mikromechanischen Aktors (6) beendet wird, während sich das Aktorelement (3) des ersten mikromechanischen Aktors (2) in den unterschiedlichen Positionen befindet.

9. Anordnung nach einem der Ansprüche 1 bis 8,
**dadurch gekennzeichnet,**
**dass** der erste mikromechanische Aktor (2) als elektrostatischer Mikroaktor ausgebildet ist.

10. Anordnung nach Anspruch 9,
**dadurch gekennzeichnet,**
**dass** der erste mikromechanische Aktor (2) einen Antrieb mit kammartig angeordneten Parallelplattenkondensatoren (8) aufweist.

11. Anordnung nach Anspruch 9 oder 10,
**dadurch gekennzeichnet,**
**dass** das Aktorelement (3) Biegegelenke (9) zur Vergrößerung eines mit dem Aktor (2) erreichbaren Bewegungshubs aufweist.

12. Anordnung nach einem der Ansprüche 1 bis 8,
**dadurch gekennzeichnet,**
**dass** der erste mikromechanische Aktor (2) als thermomechanischer Mikroaktor ausgebildet ist.

13. Anordnung nach Anspruch 12,
**dadurch gekennzeichnet,**
**dass** sich der erste mikromechanische Aktor (2) aus ein oder mehreren balkenförmigen Elementen zusammensetzt, die beidseitig am Substrat (1) eingespannt sind.

14. Anordnung nach einem der Ansprüche 1 bis 13,
**dadurch gekennzeichnet,**
**dass** der erste (4) und der zweite Bereich (5) als plattenförmige Bereiche oder Elemente ausgebildet sind.

15. Anordnung nach einem der Ansprüche 1 bis 14,
**dadurch gekennzeichnet,**
**dass** elektrische Zuführungen (7) zum ersten (4) und zweiten Bereich (5) als Mikrostripleitungen (17) ausgeführt sind und eine Schutzabdeckung (16) für den oder die mikromechanischen Aktoren (2, 6) auf dem Substrat (1) an einer Innenfläche eine Metallisierung (19) aufweist.

16. Anordnung nach einem der Ansprüche 1 bis 15,
**dadurch gekennzeichnet,**
**dass** zusätzliche feste Kapazitäten auf dem Substrat (1) ausgebildet sind, die einzeln über Schaltelemente parallel zu der durch den ersten (4) und zweiten Bereich (5) gebildeten variablen Kapazität schaltbar sind.

17. Anordnung, bestehend aus mehreren Anordnungen nach einem oder mehreren der vorangehenden Ansprüche, deren variable Kapazitäten parallel geschaltet sind.

18. Verfahren zum Einstellen einer vorgebbaren Kapazität mit einer Anordnung nach einem der Ansprüche 1 bis 16, bei dem das Aktorelement (3) des ersten mikromechanischen Aktors (2) auf eine Position bewegt wird, bei der der zweite elektrisch leitfähige Bereich (5) einen Abstand zu und eine zumindest teilweise Überdeckung mit dem ersten elektrisch leitfähigen Bereich (4) aufweist, die der vorgebbaren Kapazität entsprechen, und an dieser Position die Haltemittel (6, 10, 11) zum Halten angesteuert werden.

19. Verfahren nach Anspruch 18,
**dadurch gekennzeichnet,**
**dass** die jeweils aktuelle Position des Aktorelementes (3) über eine Messung einer Vergleichskapazität zwischen einem oder mehreren am Aktorelement (3) und am Substrat (1) vorgesehenen Bereichen erfasst wird.

20. Verfahren nach Anspruch 18 oder 19,
**dadurch gekennzeichnet,**
**dass** der erste mikromechanische Aktor (2) mit seiner Resonanzfrequenz betrieben wird.

## Claims

1. Assembly of variable capacitance, constituted by a variable coverage or a variable distance of at least one first (4) and one second electrically conductive region (5), with said first electrically conductive region (4) being configured on or in a substrate (1) and with said second electrically conductive region (5) being on or in an actuator element (3) of a first micro-mechanical actuator (2) that is disposed on said substrate (1) in such a way that it is capable of performing, by means of a first drive system, a movement of said actuator element (3) with said second region (5) along a surface of said substrate (1) at different positions relative to said first region (4), at which positions said second region (5) overlaps said first region (4) at least partly,
**characterised in**
**that** additionally holding means (6, 10, 11) are provided that are capable, by means of a second drive system independent of said first drive system, of pulling or pushing said actuator element (3) in said different positions towards said substrate (1) or a mechanical stop (13) on said substrate (1) and of holding it in these positions.

2. Assembly according to Claim 1,
**characterised in**
**that** said holding means (6, 10, 11) are constituted by at least one third electrically conductive region (10) on or in said substrate (1) and one fourth electrically conductive region (11) on or in said actuator element (3) that overlap each other in the different positions of said actuator element (3) at least partly and are capable of being subjected to a difference in electrical voltage.

3. Assembly according to Claim 1,
**characterised in**
**that** said holding means (6, 10, 11) are constituted by a second micro-mechanical actuator (6).

4. Assembly according to Claim 3,
**characterised in**
**that** said second micro-mechanical actuator (6) is a thermo-mechanical actuator that is so configured and disposed relative to said first micro-mechanical actuator (2) that it is deflected in a direction substantially orthogonal on the surface of said substrate (1) in response to thermal excitation and that a first section of said actuator element (3) of said first micro-mechanical actuator (2) in the different positions reaches up to a zone underneath a second section of said second micro-mechanical actuator (6) in a deflected state.

5. Assembly according to Claim 4,
**characterised in**
**that** said second micro-mechanical actuator (6) is composed of one or several beam-shaped elements that are clamped on both sides on said substrate (1).

6. Assembly according to Claim 4 or 5,
**characterised in**
**that** said first section of said actuator element (3) of said first micro-mechanical actuator (2) is designed as plate-like cantilever arm (14) that extends along the direction of movement of said actuator element (3).

7. Assembly according to any of the Claims 4 to 6,
**characterised in**
**that** said second section of said second micro-mechanical actuator (6) is designed as plate-like cantilever arm (15) that extends in a direction opposite to the direction of movement of said actuator element (3) of said first micro-mechanical actuator (2).

8. Assembly according to any of the Claims 4 to 7,
**characterised in**
**that** said first and second sections are so designed that they engage in each other when the thermal excitation of said second micro-mechanical actuator (6) is terminated while said actuator element (3) of said first micro-mechanical actuator (2) is in said different positions.

9. Assembly according to any of the Claims 1 to 8,
**characterised in**
**that** said first micro-mechanical actuator (2) is designed as electrostatic micro actuator.

10. Assembly according to Claim 9,
**characterised in**
**that** said first micro-mechanical actuator (2) comprises a drive system with parallel-plate capacitors (8) in a comb-like arrangement.

11. Assembly according to Claim 9 or 10,
**characterised in**
**that** said actuator element (3) comprises bending joints (9) to enlarge a stroke of movement that can be achieved with said actuator (2).

12. Assembly according to any of the Claims 1 to 8,
**characterised in**
**that** said first micro-mechanical actuator (2) is designed as thermo-mechanical micro actuator.

13. Assembly according to Claim 12,
**characterised in**
**that** said first micro-mechanical actuator (2) is composed of one or several beam-shaped elements that are clamped on both sides on said substrate (1).

14. Assembly according to any of the Claims 1 to 13,
**characterised in**
**that** said first (4) and second regions (5) are designed as plate-like regions or elements.

15. Assembly according to any of the Claims 1 to 14,
**characterised in**
**that** electrical leads (7) to said first (4) and second regions (5) are designed as micro strip-type lines (17) and that a protective cover (16) for said micro-mechanical actuator or actuators (2, 6) on said substrate (1) comprises a metal coating (19) on its inner surface.

16. Assembly according to any of the Claims 1 to 15,
**characterised in**
**that** additional invariable capacitors are configured on said substrate (1), which are adapted to be switched separately via switching elements parallel with said variable capacitor formed by said first (4) and second (5) regions.

17. Assembly consisting of one or several assemblies according to one or several of the preceding Claims, whose variable capacitors are connected in parallel.

18. Method of setting a predeterminable capacitance by means of an assembly according to any of the Claims 1 to 16, wherein said actuator element (3) of said first micro-mechanical actuator (2) is moved to a position in which said second electrically conductive region (5) presents a spacing from and an at least partial coverage with said first electrically conductive region (4), which correspond to said predeterminable capacitance, and holding means (6, 10, 11) are controlled for holding at this position.

19. Method according to Claim 18,
**characterised in**
**that** the respective actual position of said actuator element (3) is detected by a measurement of a reference capacitance between one or several regions provided on said actuator element (3) and on said substrate (1).

20. Method according to Claim 18 or 19,
**characterised in**
**that** said first micro-mechanical actuator (2) is operated at its resonance frequency.

## Revendications

1. Assemblage à capacité variable, constitué par un recouvrement (4) ou par une distance variable d'au moins des première (4) et deuxième (5) zones électroconductrices, ladite première zone électroconductrice (4) étant configurée sur ou dans un substrat (1) et ladite deuxième zone électroconductrice (5) étant formée sur ou dans un élément acteur (3) d'un premier acteur micromécanique (2), qui est disposé sur ledit substrat (1) d'une telle manière, qu'il soit capable de réaliser, moyennant un premier système de pilotage, un mouvement dudit élément acteur (3) avec ladite deuxième zone (5) le long d'une surface dudit substrat (1) aux positions différentes relatives à ladite première zone (4), auxquelles positions, ladite deuxième zone (5) chevauche ladite première zone (4), au moins en partie,
**caractérisé en ce**
**qu'**au plus, des moyens de maintien (6, 10, 11) sont disposés, qui sont capables, moyennant un deuxième système de pilotage indépendant du premier système de pilotage, de tirer ou pousser ledit élément acteur (3) en des positions différentes vers ledit substrat (1) ou vers une butée mécanique (13) sur ledit substrat (1) et de le tenir en ces positions.

2. Assemblage selon la revendication 1,
**caractérisé en ce**
**que** lesdits moyens de maintien (6, 10, 11) sont constitués par au moins une troisième zone électroconductrice (10) sur ou dans ledit substrat (1) et par une quatrième zone électroconductrice (11) sur ou dans ledit élément acteur (3), qui se chevauchent, l'une l'autre, dans les positions différentes dudit élément acteur (3), au moins en partie, et qui sont capables d'être exposé à une différence en tension électrique.

3. Assemblage selon la revendication 1,
**caractérisé en ce**
**que** lesdits moyens de maintien (6, 10, 11) sont constitués par le deuxième acteur micromécanique (6).

4. Assemblage selon la revendication 3,
**caractérisé en ce**
**que** ledit deuxième acteur micromécanique (6) est un acteur thermomécanique, qui est configuré et disposé, relativement audit premier acteur micromécanique (2), d'une telle manière, qu'il subisse une excursion en un sens essentiellement orthogonal sur la surface dudit substrat (1) en réponse à l'excitation thermique, et en ce qu'une première partie dudit élément acteur (3) dudit premier acteur micromécanique (2) dans les positions différentes s'étend jusqu'à une zone au-dessous d'une deuxième partie dudit deuxième acteur micromécanique (6) en état d'excursion.

5. Assemblage selon la revendication 4,
**caractérisé en ce**
**que** ledit deuxième acteur micromécanique (6) est composé d'un ou plusieurs éléments sous forme de barre, qui sont serrés, des deux côtés, sur ledit substrat (1).

6. Assemblage selon la revendication 4 ou 5,
**caractérisé en ce**
**que** ladite première partie dudit élément acteur (3) dudit premier acteur micromécanique (2) est conçue sous forme d'une console (14) en plaque, qui s'étend le long de la direction du mouvement dudit élément acteur (3).

7. Assemblage selon une quelconque des revendications 4 à 6,
**caractérisé en ce**
**que** ladite deuxième partie dudit deuxième acteur micromécanique (6) est conçue sous forme d'une console (15) similaire à une plaque, qui s'étend en un sens opposé à la direction de mouvement dudit élément acteur (3) dudit premier acteur micromécanique (2).

8. Assemblage selon une quelconque des revendications 4 à 7,
**caractérisé en ce**
**que** lesdits première et deuxième parties sont conçues d'une telle manière, qu'elle se trouve en prise l'une dans l'autre, quand l'excitation thermique dudit deuxième acteur micromécanique (6) est terminée, pendant que ledit élément acteur (3) dudit premier acteur micromécanique (2) se trouve dans ses positions différentes.

9. Assemblage selon une quelconque des revendications 1 à 8,
**caractérisé en ce**
**que** ledit premier acteur micromécanique (2) est conçu sous forme d'un micro acteur électrostatique.

10. Assemblage selon la revendication 9,
**caractérisé en ce**
**que** ledit premier acteur micromécanique (2) comprend un système de pilotage aux condensateurs (8) à lames parallèles en un arrangement en peigne.

11. Assemblage selon la revendication 9 ou 10,
**caractérisé en ce**
**que** ledit élément acteur (3) comprend des joints articulés de flexion (9) afin d'élargir une course de mouvement, qui est achevable moyennant ledit acteur (2).

12. Assemblage selon une quelconque des revendications 1 à 8,
**caractérisé en ce**
**que** ledit premier acteur micromécanique (2) est conçu sous forme d'une micro acteur thermomécanique

13. Assemblage selon la revendication 12,
**caractérisé en ce**
**que** ledit premier acteur micromécanique (2) est composé d'un ou plusieurs éléments sous forme de barre, qui sont serrés des deux côtés sur ledit substrat (1).

14. Assemblage selon une quelconque des revendications 1 à 13,
**caractérisé en ce**
**que** lesdites première (4) et deuxième (5) zones sont conçues sous forme de zones ou éléments en plaque.

15. Assemblage selon une quelconque des revendications 1 à 14,
**caractérisé en ce**
**que** des fiches de liaison électrique (7) vers lesdites première (4) et deuxième (5) zones sont conçues sous forme de lignes à micro bande (17), et en ce qu'un couvercle de protection (16) pour le(s)dit(s) acteur(s) micromécanique(s) (2, 6) sur ledit substrat (1) comprend un revêtement métallique (19) à sa surface intérieure.

16. Assemblage selon une quelconque des revendications 1 à 15,
**caractérisé en ce**
**que** des condensateurs non variables supplémentaires sont configurés sur ledit substrat (1), qui sont aptes à être commuté individuellement via des éléments commutateurs en parallèle audit condensateur variable, qui est constitué par lesdites première (4) et deuxième (5) zones.

17. Groupe composé d'un ou plusieurs assemblages selon une ou plusieurs des revendications précédentes, dont les condensateurs variables sont reliés en parallèle.

18. Procédé à régler une capacité prédéterminable moyennant un assemblage selon une quelconque des revendications 1 à 16, dans lequel ledit élément acteur (3) dudit premier acteur micromécanique (2) est déplacé en une position, à laquelle ladite deuxième zone électroconductrice (5) se trouve en écart de ladite première zone électroconductrice (4) et en chevauchement, au moins partiel, avec la dernière, qui correspondent à ladite capacité prédéterminable, et dans lequel des moyens de maintien (6, 10, 11) sont commandés afin de les tenir à cette position.

19. Procédé selon la revendication 18,
**caractérisé en ce**
**que** la position actuelle respective dudit élément acteur (3) est détecté en mesurant une capacité de référence entre un ou plusieurs zones formés sur ledit élément acteur (3) et sur ledit substrat (1).

20. Procédé selon la revendication 18 ou 19,
**caractérisé en ce**
**que** ledit premier acteur micromécanique (2) est commandé à sa fréquence de résonance.
